(19) Europäisches Patentamt
European Patent Office
Office européen des brevets

(11) **EP 4 147 020 B1**

(12) **FASCICULE DE BREVET EUROPEEN**

(45) Date de publication et mention de la délivrance du brevet:
**30.10.2024 Bulletin 2024/44**

(21) Numéro de dépôt: **21732436.7**

(22) Date de dépôt: **07.05.2021**

(51) Classification Internationale des Brevets (IPC):
**G01K 3/00** *(2006.01)*    **G01K 11/06** *(2006.01)*

(52) Classification Coopérative des Brevets (CPC):
**G01K 3/005; G01K 11/06**

(86) Numéro de dépôt international:
**PCT/FR2021/050783**

(87) Numéro de publication internationale:
**WO 2021/224580 (11.11.2021 Gazette 2021/45)**

(54) **DISPOSITIF ET MÉTHODE POUR LA DÉTECTION D'UNE VARIATION DE TEMPÉRATURE**

VORRICHTUNG UND VERFAHREN ZUR ERFASSUNG EINER TEMPERATURÄNDERUNG

DEVICE AND METHOD FOR DETECTING A VARIATION IN TEMPERATURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.05.2020 FR 2004567**

(43) Date de publication de la demande:
**15.03.2023 Bulletin 2023/11**

(73) Titulaire: **Agro-Forestier du Puntal
82000 Montauban (FR)**

(72) Inventeur: **COLETTO-TONICELLO, Fabrice
82000 MONTAUBAN (FR)**

(74) Mandataire: **Regimbeau
20, rue de Chazelles
75847 Paris Cedex 17 (FR)**

(56) Documents cités:
**US-A1- 2007 098 039    US-A1- 2014 048 010
US-B1- 7 275 863**

**Description**

**DOMAINE DE L'INVENTION**

La présente invention porte sur un dispositif témoin ainsi qu'une méthode de détection d'une variation de la température dans une enceinte. En outre, la présente invention porte sur un procédé de préparation dudit dispositif témoin. La présente invention peut notamment être utilisée pour détecter une rupture dans la chaîne du froid dans une enceinte, notamment une enceinte de conservation.

**ART ANTERIEUR**

La chaîne du froid est une étape critique dans tout le système des produits frais et périssables, notamment dans le domaine alimentaire ou médical. Le respect strict de la chaîne du froid joue un rôle fondamental pour la santé humaine, notamment dans le combat contre l'intoxication alimentaire, ainsi que pour les médicaments (par exemple vaccins, insuline) sensibles à la température pendant le transport et le stockage.

Toute la chaîne du froid est entièrement dévolue à éviter à la fois la multiplication et l'activité des microbes à l'intérieur des produits sensibles à la température et/ou qui contiennent de « l'eau libre », ce qui veut dire des molécules d'eau qui ne sont pas liées chimiquement au sel ou au sucre *lato sensu.* Ces microbes peuvent répandre toutes sortes de toxines provoquant parfois la mort.

Actuellement, les dispositifs proposés pour la détection d'une rupture de la chaîne du froid, sont des dispositifs à « destin couplé » avec la distribution alimentaire, utilisables une seule fois et jetables. Ces marqueurs ont une sensibilité variable à la température et peuvent restituer avec un certain taux de précision les variations de température incrémentielles rencontrées au cours du traitement (transport, stockage).

Ces dispositifs reposent notamment sur :

un processus chimique : un matériau thermochrome prend une autre couleur après avoir atteint une température seuil, et cette évolution est irréversible. Entre autres articles disponibles, se trouve : *FREEZEmarker®, TransTracker®* de la société Temptime ; *WarmMark®* de Evidencia ; et *Clearing-Point®* et *Thermostrip®* de Hallcrest Inc ;

un processus microbiologique : une bactérie lactique sur un substrat changera de couleur dès qu'une température excessive sera atteinte du fait de réactions biotiques. Une fois utilisés, ces derniers dispositifs sont jetés. Parmi ces dispositifs, on peut citer *Topcryo®* de la société Cryolog ;

un dispositif électronique : une RFID (radio-identification) contient un micro-enregistreur de température et transférera ses données quand le lecteur sera près du transpondeur. La précision peut être améliorée avec une enzyme : dès que la température varie, l'enzyme modulera son impédance électrique qui est enregistrée dans la mémoire sur la puce de la carte mère RFID. En matière de dispositif de température RFID on peut citer *Thermobouton®* de la société Thermo Track.

US 2007/098039 A1, US 7 275 863 B1 et US 2014/048010 A1 concernent des indicateurs de gel de l'art antérieur.

Bien que tous ces dispositifs soient fiables au niveau de la précision métrologique attendue, ils sont parfois coûteux et ne sont pas infalsifiables. En effet, ils sont incapables de prévenir un étiquetage frauduleux pour cacher une faille dans la boucle au cours du processus de la chaîne du froid.

Il existe donc un besoin d'un dispositif pour la détection d'une rupture de la chaîne du froid qui soit simple, fiable, infalsifiable et en outre abordable par rapport aux solutions techniques fournies actuellement en matière de détection du respect de la chaîne du froid.

**RESUME DE L'INVENTION**

Dans le cadre de la présente invention, les inventeurs ont découvert un dispositif permettant de détecter une variation de température, avantageusement une élévation de température, dans une enceinte, sans risque de falsification et adaptable à toute température.

En particulier, les inventeurs ont préparé un dispositif de détection d'une variation de température en utilisant le mouvement brownien afin d'obtenir des formes tridimensionnelles, comme des volutes, par injection d'une composition colorée à l'intérieur d'un solvant. Après injection de la composition colorée dans le solvant puis diffusion pendant une durée fixe en fonction de la vitesse de diffusion de la composition colorée dans le solvant, le processus est stoppé par congélation du solvant. Ainsi, entre le démarrage de la diffusion à $t_0$ et la diffusion totale qui serait atteinte à $t_f$ si la composition colorée était uniformément distribuée dans le solvant, il existe un nombre infini de périodes t évoluant en tant que variable discrète, et à chaque période t correspond un unique arrangement moléculaire spécifique qui produit une forme visible spécifique. Ladite forme visible spécifique est non-reproductible, ce qui rend le dispositif infalsifiable.

En effet, les contours des formes visibles spécifiques sont générés aléatoirement et sont le résultat du choc réciproque des molécules les unes dans les autres du fait de l'énergie cinétique observée dans la phase liquide du solvant (mouvement brownien).

Dans le cadre de l'invention, le solvant est choisi en fonction de sa température de solidification qui doit correspondre à la température maximale que l'enceinte surveillée peut atteindre. Lorsque la température maximale de l'enceinte est dépassée, la température de solidification du solvant est également dépassée et la fusion du solvant commence. Ainsi, la composition colorée peut recommencer à diffuser par mouvement brownien dans le solvant, entraînant la modification de la forme visible spécifique obtenue au temps $t_1$ et la création d'une nouvelle forme visible spécifique.

Dans un premier aspect, la présente invention porte sur dispositif témoin pour la détection d'une variation de la température dans une enceinte, caractérisé en ce qu'il comprend un réceptacle ayant au moins une portion de surface transparente comprenant un solvant solide, avantageusement transparent, dont la température de solidification correspond au seuil maximal de température souhaité dans l'enceinte, dans lequel une composition colorée de couleur différente dudit solvant a été partiellement diffusée avant solidification dudit solvant.

Il est bien clair que l'expresssion « solvant solide » compris dans le réceptacle s'entend d'un solvant qui a subi une solidification après que la composition colorée a diffusé. Ainsi l'expression « solvant solide » s'entend aussi par « solvant solidifié ».

Le solvant est (comme tout liquide) parfois à l'état liquide et parfois à l'état solide selon la température puisque c'est en effet la variation de température que détecte le dispositif de l'invention qui fait que le solvant sera solide ou liquide. Aussi, lors de son utilisation, le dispositif de l'invention, comprend le solvant à l'état solide dans lequel a été dissipé et « figé » le colorant selon un « *profil 3D* » bien spécifique et ce grâce à la solidification du solvant. La notion de solvant solide fait ainsi bien référence à un solvant solidifiée. C'est la modification de ce profil du fait de la modification de l'état solide vers l'état liquide du solvant qui sera le marqueur d'une altération ou d'une corruption thermique du système.

Dans un second aspect, la présente invention porte sur un procédé de préparation d'un dispositif témoin pour la détection d'une variation de la température dans une enceinte, comprenant les étapes suivantes :

a) Choisir un solvant liquide, avantageusement transparent à l'état solide, dont la température de solidification correspond au seuil maximal de température souhaité dans l'enceinte ;

b) Choisir une composition colorée de couleur différente dudit solvant ;

c) Introduire ledit solvant liquide dans un réceptacle ayant au moins une portion de surface transparente, ledit réceptacle comprenant au moins une ouverture permettant d'incorporer le solvant puis la composition colorée ;

d) Eventuellement, refroidissement dudit solvant liquide ;

e) Introduction, et diffusion partielle de la composition colorée dans ledit solvant liquide, ladite composition colorée étant de couleur différente dudit solvant ;

f) Refroidissement de sorte à solidifier au moins le solvant liquide dans lequel la composition colorée a été diffusée partiellement, de sorte à donner une forme spécifique à la composition colorée diffusée qu'elle ne peut conserver que par le maintien de l'enceinte à une température au-dessous de la température de solidification dudit solvant.

Ainsi lorsque le dispositif selon l'invention est mis en place, le solvant a été solidifié, il s'agit donc d'un solvant solide.

Dans un troisième aspect, la présente invention porte sur une méthode de détection d'une variation de la température dans une enceinte, ladite méthode comprenant les étapes de :

i) Fournir un dispositif selon l'invention ou susceptible d'être obtenue par le procédé selon l'invention ;

ii) Placement dudit dispositif dans l'enceinte ;

iii) Contrôle de la forme spécifique de la composition colorée partiellement diffusée dans le solvant.

## DESCRIPTION DE L'INVENTION

### Définition

Au sens de la présente invention, par « variation de température », on entend une élévation et/ou une diminution de la température d'une enceinte par rapport à une température seuil déterminée. La variation peut notamment être au moins une élévation de la température au-dessus de la valeur seuil, éventuellement suivie d'une diminution en-dessous de la valeur seuil.

Au sens de la présente invention, par « translucide », on entend un corps transmettant la lumière de manière diffuse et au travers duquel les objets apparaissent flous. Il se distingue des corps transparents, qui laissent passer la lumière et permettent de distinguer les objets, et des matériaux opaques qui absorbent ou réfléchissent les rayons lumineux. Selon la présente invention corps peut être translucide et coloré.

Au sens de la présente invention, par « transparent », on entend un corps transmettant la lumière visible par réfraction et au travers duquel les objets sont visibles avec netteté. Selon la présente invention, le corps peut être transparent et coloré.

Au sens de la présente invention, par « composition colorée », on entend une composition liquide, solide ou gazeuse, en particulier liquide ou solide, qui est soluble et miscible dans un solvant donné et qui présente une couleur différente de la couleur du solvant, que ce soit une couleur visible à la lumière ou une couleur visible sous rayonnements ultraviolet (UV) ou infrarouge (IR). Avantageusement, la couleur de la composition colorée est visible à la lumière ou sous rayonnement UV. Avantageusement, la couleur de la composition colorée contraste significativement avec la couleur du solvant, de sorte à garantir une acquisition optique de qualité.

Dans un mode alternatif de réalisation, la composition colorée présente deux couleurs ou plus et ces deux couleurs ou plus contrastent significativement avec la couleur du solvant. Ainsi la solution colorée peut comprendre, ou consister, en 2, voire 3, voire 4, solutions colorées de couleur différente du solvant, et qui n'ont pas diffusé les unes dans les autres au point de former une solution de couleur uniforme, au moment de l'étape e). On dispose ainsi d'une solution colorée qui crée, lorsqu'elle est introduite et diffuse dans le solvant liquide, deux, ou trois, ou quatre, volutes de diffusion de couleurs différentes ce qui permet d'augmenter le degré d'information et la finesse. Par exemple, si la composition colorée est sous forme solide, il pourra s'agir d'un mélange de plusieurs cristaux de couleurs différentes, qui, lorsqu'introduits dans le solvant, vont se dissoudre et créer des volutes de plusieurs couleurs, différentes de la couleur du solvant.

Ainsi, après injection dans un solvant, la composition soluble peut se diffuser dans ledit solvant.

Au sens de la présente invention, par « solution électrolytique », on entend une solution comprenant un sel dans de l'eau.

Au sens de la présente invention, par « sel », on entend un composé ionique composé de cations et d'anions formant un produit neutre et sans charge nette. Ces ions peuvent être aussi bien minéraux (ex : chlorure Cl⁻) qu'organiques (ex : acétate $CH_3\text{-}COO^-$), et monoatomiques (ex : fluorure F⁻) aussi bien que polyatomiques (sulfate $SO_4^{2-}$).

Au sens de la présente invention, on entend par « emballage isotherme », un emballage qui peut maintenir des produits au frais (+2/+8°C), congelés (-18/-20°C) ou encore à température dite « ambiante » (+15/+25°C).

Au sens de la présente invention, on entend par « lumière visible », la partie du spectre électromagnétique visible pour l'humain, en particulier dans la gamme de longueurs d'onde dans le vide comprises entre 380 et 780 nm.

Au sens de la présente invention, on entend par « rayonnement ultraviolet (UV) », un rayonnement électromagnétique de longueur d'onde inférieure à celle de la lumière visible, mais supérieure à celle des rayons X. Les rayons UV ne peuvent être observés qu'indirectement, soit par la fluorescence, soit à l'aide de détecteurs spécialisés. Le rayonnement UV émet en particulier dans la gamme de longueur d'onde de 100 à 400 nm.

Au sens de la présente invention, on entend par « rayonnement infrarouge (IR) », un rayonnement électromagnétique de longueur d'onde supérieure à celle de la lumière visible, mais inférieure à celle des micro-ondes. Le rayonnement IR émet en particulier dans la gamme de longueur d'onde de 780 nm à 1mm.

Dans le cadre de l'invention, une composition colorée de couleur différente du solvant utilisé, est partiellement diffusée dans le solvant avant solidification dudit solvant.

Dans le cadre de la présente invention, on entend par « composition partiellement diffusée », une composition qui n'est pas totalement diffusée dans le solvant. Ainsi, dans le dispositif selon l'invention, une forme tridimensionnelle colorée apparait dans le solvant solide. Comme évoqué précédemment, l'expression « solvant solide » fait référence au solvant solidifié. Cette forme tridimensionnelle correspond à la composition colorée qui a été partiellement diffusée dans le solvant avant solidification et qui est ainsi figée dans le solvant solide (ou solvant solidifié). Si la diffusion avait été totale, le dispositif aurait une couleur homogène et aucune forme spécifique ne serait visible.

Avantageusement, la composition colorée est une solution liquide miscible dans le solvant ou un solide soluble dans le solvant. De manière avantageuse le colorant de la composition colorée est un colorant alimentaire. L'expression « colorant alimentaire » s'entend ici au sens de la directive européenne 94/36/EC qui définit ainsi les colorants alimentaires comme des substances qui ajoutent ou redonnent de la couleur à des denrées alimentaires. Il peut s'agir de constituants naturels de denrées alimentaires ou d'autres sources naturelles, qui ne sont pas normalement consommés comme aliments en soi et ne sont pas utilisés habituellement comme ingrédients caractéristiques dans l'alimentation.

Par « solution liquide miscible » on entend, au sens de l'invention, une solution liquide qui, à une plage de température donnée, peut se mélanger avec le solvant liquide pour donner une solution liquide homogène. De manière avantageuse, la solution liquide miscible est une solution préparée avec un colorant alimentaire. La plage de température de miscibilité comprendra avantageusement la température de solidification du solvant de sorte que la composition colorée puisse se diffuser dans le solvant dès le début de la fusion de ce dernier.

De même, par « solide soluble » on entend, au sens de l'invention, une composition solide, par exemple sous forme de poudre, granule ou tablette compactée, qui, à une plage de température donnée, peut se dissoudre avec le solvant liquide pour donner une solution liquide homogène. De manière avantageuse, le solide soluble est un colorant alimentaire. La plage de température de solubilité comprendra avantageusement la température de solidification du solvant de sorte que la composition colorée puisse se diffuser dans le solvant dès le début de la fusion de ce dernier.

Dans le cadre de la présente invention, la diffusion de la composition colorée dans le solvant dépend notamment de la viscosité de composition colorée. En effet, plus la viscosité est élevée, plus la vitesse de diffusion sera faible. Lors de la fusion du solvant, la diffusion de la composition colorée sera alors plus lente et une diminution brève de la température pourrait ne pas être détectée. A l'inverse, plus la viscosité est faible, plus la vitesse de diffusion sera élevée. Ainsi, lors de la préparation du dispositif, il pourrait être difficile de solidifier le solvant avant diffusion totale de la composition colorée. Par conséquent, la composition colorée a avantageusement une viscosité comprise entre 1 et 1000 mPa.s, à température ambiante (c'est-à-dire environ 20°C), particulièrement entre 1 et 500 mPa.s, plus particulièrement entre 1 et 250 mPa.s.

## Dispositif témoin pour la détection d'une variation de la température dans une enceinte

La présente invention porte sur un dispositif témoin pour la détection d'une variation de la température dans une enceinte, caractérisé en ce qu'il comprend un réceptacle ayant au moins une portion de surface transparente comprenant un solvant solide, avantageusement transparent, dont la température de solidification correspond au seuil maximal de température souhaité dans l'enceinte, dans lequel une composition colorée de couleur différente dudit solvant a été partiellement diffusée avant solidification dudit solvant. Comme évoqué précédemment, l'expression « solvant solide » fait référence au solvant solidifié.

Selon l'invention, le dispositif est adapté pour la détection d'une variation de la température dans une enceinte, avantageusement pour la détection d'une élévation de la température.

Dans le cadre de l'invention, l'élévation de la température peut éventuellement être suivie d'une diminution de la température. Dans ce cadre, il est possible que la température de l'enceinte augmente, par exemple suite à un défaut technique transitoire du système de maintien de la température, puis que la température diminue pour atteindre de nouveau la température initiale de l'enceinte.

Avantageusement, dans le cadre de l'invention, la variation de la température caractérise une rupture de la chaîne du froid. Ainsi, le dispositif selon l'invention est avantageusement un dispositif pour la détection d'une rupture de la chaîne du froid.

Avantageusement, le dispositif selon l'invention permet de détecter une variation de la température de 1°C ou moins.

Avantageusement, le dispositif selon l'invention permet de détecter une élévation de la température de 1°C ou moins.

Dans le cadre de la présente invention, l'enceinte est avantageusement une enceinte de conservation, avantageusement de conservation de produits sensibles à la température.

Avantageusement, l'enceinte est un emballage primaire, secondaire ou tertiaire, tel qu'un emballage isotherme ou un container de transport tel qu'un container de transport maritime, aérien, routier ou spatial ; un moyen de transport tel qu'un camion réfrigéré ou un chariot réfrigéré ; un moyen de manutention tel qu'une salle blanche ; ou un moyen de stockage tel qu'un réfrigérateur, une chambre froide ou un congélateur.

Selon l'invention, la température maximale que l'enceinte surveillée peut atteindre détermine le choix du solvant choisi. En effet, la fusion du solvant solide doit commencer dès lors que la température maximale de l'enceinte est dépassée, permettant ainsi la reprise de la diffusion de la composition colorée dans le solvant par mouvement brownien.

Or, selon les produits, les normes fixent les températures limites et les tolérances de dépassement. Par exemple, de nombreux produits alimentaires frais doivent être maintenus à des températures comprises entre +2°C à +8°C ; le poisson frais doit être maintenu à des températures comprises entre 0 °C à +2°C ; et les produits congelés doivent être maintenus à des températures inférieures à -18°C. Les problématiques de respect de la chaîne du froid se retrouvent aussi dans les produits pharmaceutiques (vaccins, produits sanguins, matériel de greffe...). La température maximale dépend alors de chaque produit pharmaceutique.

Ainsi, dans le dispositif selon l'invention, le solvant a avantageusement une température de solidification inférieure ou égale à +25°C, avantageusement inférieure ou égale à 20 °C, plus avantageusement inférieure ou égale à +15°C, plus avantageusement inférieure ou égale à +8°C, encore plus avantageusement inférieure ou égale à +5°C, encore plus avantageusement inférieure ou égale à +2°C, encore plus avantageusement inférieure ou égale à 0°C,

Dans le dispositif selon l'invention, le solvant a avantageusement une température de solidification inférieure ou égale à -18°C.

Avantageusement, dans le dispositif selon l'invention, le solvant a une température de solidification comprise entre -18°C et +25°C, avantageusement entre -18°C et +20°C, plus avantageusement entre -18°C et +15°C, plus avantageusement comprise entre -18°C et +8°C.

Dans le cadre de produits congelés, dans le dispositif selon l'invention, le solvant a avantageusement une température de solidification comprise entre -18°C et 0°C, plus avantageusement comprise entre -18°C et -6°C.

Dans le cadre de produits réfrigérés, dans le dispositif selon l'invention, le solvant a avantageusement une température de solidification comprise entre 0°C et +25°C, avantageusement entre 0°C et +20°C, plus avantageusement entre 0°C et +15°C, plus avantageusement comprise entre 0°C et +8°C.

Avantageusement, dans le dispositif selon l'invention, le solvant a une température de solidification environ égale à -18°C, 0°C, +2°C, +5°C, +8°C, +15°C, +20°C, ou +25°C.

Selon la présente invention, le solvant est avantageusement transparent afin de permettre une acquisition optique nette de la forme visible formée par la composition colorée diffusée dans le solvant un fois solidifié. Ainsi, selon la présente invention, le solvant est avantageusement choisi parmi tous les solvants transparents à l'état solide et ayant une température de solidification correspondant au seuil maximal de température souhaité dans l'enceinte à surveiller.

Le solvant peut ne pas être transparent à l'état solide et dans un tel cas de figure, il conviendra de laisser diffuser le soluté jusqu'à ce que les volutes de diffusion touchent ou affleurent la surface transparente et y créent des points singuliers. La définition sera moins fine qu'avec un solvant transparent donnant des points singuliers en 3D, mais la « signature » 2D sera tout aussi fidèle et exploitable.

Il n'est pas possible de donner une définition de la classe chimique d'un solvant convenable car c'est plus sa température de solidification qui déterminera son aptitude à constituer un solvant convenable que sa seule classe chimique. On peut cependant en citer certaines, et ce à titre d'exemples illustratifs et non limitatifs.

Avantageusement, le solvant est choisi parmi l'eau, les hydrocarbures, une huile, un alcool, une solution électrolytique aqueuse, et leurs mélanges miscibles.

Avantageusement, parmi les hydrocarbures, on peut citer : le cyclohexane, le benzène, le xylène, ainsi que les hydrocarbures halogénés tels que le 1,2dichlorobenzene ou le tétrachlorure de carbone.

Avantageusement, parmi les huiles, végétales ou animales, on peut citer l'huile de colza, l'huile de maïs, l'huile d'olive, les huiles de poissons, utilisées seules ou en mélanges.

Avantageusement, parmi les alcools, on peut citer : le 1-octanol, l'éthylène glycol.

Avantageusement, parmi les solutions électrolytiques aqueuses, on peut citer : les solutions eau/NaCl ou eau/MgCl par exemple. Dans le cas des solutions électrolytiques, et notamment des solutions eau/NaCl, la concentration en sel (par exemple en NaCl) dans la solution influe sur la température de solidification. Ainsi une solution eau/NaCl comprenant 20% de NaCl aura une température de solidification de -20°C. Une solution eau/NaCl comprenant 22% de NaCl aura une température de solidification de -19,2°C. L'homme du métier saura ajuster la concentration en sel pour obtenir la température de solidification souhaitée tout en évitant une saturation de la solution en sel qui entrainerait une turbidité et donc un défaut de transparence. Ce type de solvant est donc particulièrement avantageux dans le cadre de l'invention car il est économique et permet de choisir une température de solidification spécifique sans être contraint par une liste de solvant restreinte.

Avantageusement, le solvant est choisi parmi les solvants cités dans le tableau 1 ci-dessous, en relation avec leur température de solidification/fusion.

[Tableau 1]

| Solvant | Température de solidification/fusion |
|---|---|
| Acide acétique | +16.2°C |
| 1-octanol | +15°C |
| p-Xylène | +12-+13°C |
| 1,4-dioxane | 11.8°C |
| Bromure d'éthylène | 9.974°C |
| Acide formique | +8°C |
| Cyclohexane | +6.5°C |
| nitrobenzene | +5.7° C |
| Benzène | +5°C |
| Eau | 0°C |
| Aniline | -5.96°C |
| Brome | -7.1°C |
| Ethylène glycol | -12.9°C |

(suite)

| Solvant | Température de solidification/fusion |
|---|---|
| Benzonitrile | -13°C |
| 1,2dichlorobenzene | -18 to -15°C |
| Solution eau/NaCl 78/22 | -19.2°C |
| Solution eau/NaCl 80/20 | -20 °C |
| Tétrachlorure de carbone | -23 °C |

Dans le cadre de l'invention, le réceptacle du dispositif est adapté pour recevoir le solvant liquide qui sera ensuite solidifié, ainsi que la composition colorée. Ainsi, ledit réceptacle comprend au moins une ouverture permettant l'introduction du solvant puis de la composition colorée.

Selon l'invention, le réceptacle peut être de toute forme et de toute matière. Avantageusement, le réceptacle comprend au moins une surface plane, plus avantageusement au moins 2 surfaces planes, de manière plus avantageuse au moins 3 surfaces planes. Avantageusement, l'ensemble des surfaces du réceptacle sont planes. En effet, dans le cadre de l'invention, plus le réceptacle comprend de surface plane, plus l'analyse du dispositif est précise car effectuée sur plusieurs plans.

Selon l'invention, le réceptacle doit présenter au moins une portion de surface transparente. Avantageusement, le réceptacle comprend au moins deux surfaces ayant au moins une portion transparente. Plus avantageusement, le réceptacle comprend au moins trois surfaces ayant au moins une portion transparente. De manière particulièrement avantageuse, le réceptacle est totalement transparent. Selon l'invention, plus le réceptacle comprend des surfaces avec au moins une portion transparente, plus l'analyse du dispositif est précise car effectuée sur plusieurs plans.

Ainsi, le choix de la composition colorée utilisée dans le dispositif selon l'invention est déterminé en fonction du choix du solvant utilisé, et en particulier de la température de solidification de ce solvant. De manière avantageuse, la composition colorée contient au moins un colorant alimentaire ou le colorant de cette composition colorée est un colorant alimentaire.

Par exemple, si dans le dispositif selon l'invention le solvant utilisé est l'eau, la composition colorée peut être une composition liquide ou solide, non incolore à la lumière ou visible sous rayonnement UV ou IR, miscible/soluble dans une plage de température comprenant la valeur 0°C, et présentant une viscosité comprise entre 1 et 1000 mPa.s, à température ambiante (c'est-à-dire environ 20°C), particulièrement entre 1 et 500 mPa.s, plus particulièrement entre 1 et 250 mPa.s.

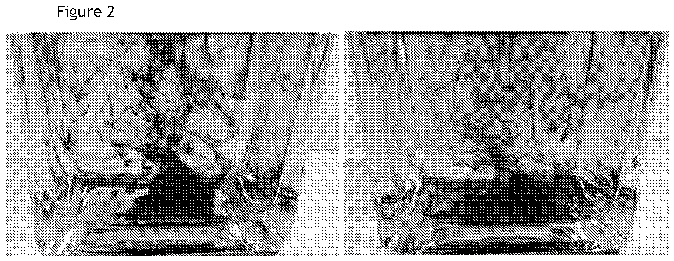

Un exemple de dispositif selon l'invention est représenté à la Figure 2. Dans cette figure, le dispositif comprend une forme tridimensionnelle (face (0,x,y) à gauche et face adjacente (0,z,y) à droite). Ladite forme a été obtenue par diffusion partielle d'une encre dans de l'eau puis solidification de l'eau.

Procédé de préparation du dispositif selon l'invention

La présente invention porte en outre sur un procédé de préparation d'un dispositif témoin pour la détection d'une variation de la température dans une enceinte, comprenant les étapes suivantes :

a) Choisir un solvant liquide, avantageusement transparent à l'état solide, dont la température de solidification correspond au seuil maximal de température souhaité dans l'enceinte ;

b) Choisir une composition colorée de couleur différente dudit solvant ;

c) Introduire ledit solvant liquide dans un réceptacle ayant au moins une portion de surface transparent, ledit réceptacle comprenant au moins une ouverture permettant d'incorporer le solvant puis la composition colorée ;

d) Eventuellement, refroidissement dudit solvant liquide ;

e) Introduction, et diffusion partielle de la composition colorée dans ledit solvant liquide, ladite composition colorée étant de couleur différente dudit solvant ;

f) Refroidissement de sorte à solidifier au moins le solvant liquide dans lequel la composition colorée a été diffusée partiellement, de sorte à donner une forme spécifique à la composition colorée diffusée qu'elle ne peut conserver que par le maintien de l'enceinte à une température au-dessous de la température de solidification dudit solvant.

Comme développé ci-dessus, le choix du solvant (étape a)) dépend de la température maximale que l'enceinte surveillée peut atteindre. Les caractéristiques du solvant sont telles que définies ci-dessus.

En particulier, le solvant a avantageusement une température de solidification inférieure ou égale à +25°C, avantageusement inférieure ou égale à 20 °C, plus avantageusement inférieure ou égale à +15°C, plus avantageusement inférieure ou égale à +8°C, encore plus avantageusement inférieure ou égale à +5°C, encore plus avantageusement inférieure ou égale à +2°C, encore plus avantageusement inférieure ou égale à 0°C,

Avantageusement, le solvant a une température de solidification inférieure ou égale à -18°C.

Avantageusement, le solvant a une température de solidification comprise entre - 18°C et +25 °C, avantageusement entre -18°C et +20°C, plus avantageusement entre -18°C et +15°C, plus avantageusement comprise entre -18°C et +8°C.

Dans le cadre de produits congelés, le solvant a avantageusement une température de solidification comprise entre -18°C et 0°C, plus avantageusement comprise entre -18°C et -6°C.

Dans le cadre de produits réfrigérés, le solvant a avantageusement une température de solidification comprise entre 0°C et +25°C, avantageusement entre 0°C et +20°C, plus avantageusement entre 0°C et +15°C, plus avantageusement comprise entre 0°C et +8°C.

Avantageusement, le solvant a une température de solidification environ égale à - 18°C, 0°C, +2°C, +5°C, +8°C, +15°C, +20°C, ou +25°C.

Selon la présente invention, le solvant est avantageusement transparent à l'état solide afin de permettre une acquisition optique nette de la forme visible formée par la composition colorée diffusée dans le solvant. Ainsi, selon la présente invention, le solvant est avantageusement choisi parmi tous les solvants transparents à l'état solide ayant une température de solidification correspondant au seuil maximal de température souhaité dans l'enceinte à surveiller.

Le solvant peut ne pas être transparent à l'état solide et dans un tel cas de figure, il conviendra de laisser diffuser le soluté jusqu'à ce que les volutes de diffusion touchent ou affleurent la surface transparente et y créent des points singuliers. La définition sera moins fine qu'avec un solvant transparent donnant des points singuliers en 3D, mais la « signature » 2D sera tout aussi fidèle et exploitable.

Il n'est pas possible de donner une définition de la classe chimique d'un solvant convenable car c'est plus sa température de solidification qui déterminera son aptitude à constituer un solvant convenable que sa seule classe chimique. On peut cependant en citer certaines, et ce à titre d'exemples illustratifs et non limitatifs.

Avantageusement, le solvant est choisi parmi l'eau, les hydrocarbures, une huile, un alcool, une solution électrolytique aqueuse, et leurs mélanges.

Avantageusement, parmi les hydrocarbures, on peut citer : le cyclohexane, le benzène, le xylène ainsi que les hydrocarbures halogénés tels que le 1,2dichlorobenzene ou le tétrachlorure de carbone.

Avantageusement, parmi les huiles, végétales ou animales, on peut citer l'huile de colza, l'huile de maïs, l'huile d'olive, les huiles de poissons, utilisées seules ou en mélanges.

Avantageusement, parmi les alcools, on peut citer : le 1-octanol et l'éthylène glycol par exemple. Avantageusement, parmi les solutions électrolytiques aqueuses, on peut citer : les solutions eau/NaCl et eau/MgCl par exemple. Dans le cas des solutions électrolytiques, et notamment des solutions eau/NaCl, la concentration en sel (par exemple en NaCl) dans la solution influe sur la température de solidification. Ainsi une solution eau/NaCl comprenant 20% de NaCl aura une température de solidification de -20°C. Une solution eau/NaCl comprenant 22% de NaCl aura une température de solidification de -19,2°C. L'homme du métier saura ajuster la concentration en sel pour obtenir la température de solidification souhaitée tout en évitant une saturation de la solution en sel qui entrainerait une turbidité et donc un défaut de transparence. Ce type de solvant est donc particulièrement avantageux dans le cadre de l'invention car il est économique et permet de choisir une température de solidification spécifique sans être contraint par une liste de solvant restreinte.

Avantageusement, le solvant est choisi parmi les solvants cités dans le tableau 1 ci-dessus, en relation avec leur température de solidification/fusion.

De même, comme développé ci-dessus, le choix de la composition colorée (étape b)) dépend du choix du solvant. Les caractéristiques de la composition colorée sont telles que définies ci-dessus.

En particulier, la composition colorée est avantageusement une solution liquide miscible dans le solvant, ou un solide soluble dans le solvant tel qu'un solide sous forme de poudre, granule ou tablette compactée.

Avantageusement, la couleur de la composition colorée est visible à la lumière, sous rayonnement IR ou sous rayonnement UV, plus avantageusement visible à la lumière ou sous rayonnement UV.

Avantageusement, la couleur de la composition colorée contraste significativement avec la couleur du solvant, de sorte à garantir une acquisition optique de qualité.

La composition colorée a avantageusement une viscosité comprise entre 1 et 1000 mPa.s, à température ambiante (c'est-à-dire environ 20°C), particulièrement entre 1 et 500 mPa.s, plus particulièrement entre 1 et 250 mPa.s.

Selon l'invention, le choix de la composition colorée utilisée dans le dispositif selon l'invention est déterminé en fonction du choix du solvant utilisé, et en particulier de la température de solidification de ce solvant.

Par exemple, si dans le dispositif selon l'invention le solvant utilisé est l'eau, la composition colorée peut être une composition liquide ou solide, non incolore à la lumière ou visible sous rayonnement UV ou IR, miscible/soluble dans une plage de température comprenant la valeur 0°C, et présentant une viscosité comprise entre 1 et 1000 mPa.s, à température ambiante (c'est-à-dire environ 20°C), particulièrement entre 1 et 500 mPa.s, plus particulièrement entre 1 et 250 mPa.s.

Lors de l'étape c), le solvant liquide est introduit dans un réceptacle ayant au moins une portion de surface transparente. Dans le cadre de l'invention, le réceptacle du dispositif est adapté pour recevoir le solvant liquide qui sera ensuite solidifié, ainsi que la composition colorée. Ainsi, ledit réceptacle comprend au moins une ouverture permettant l'introduction du solvant puis de la composition colorée.

Le réceptacle peut être de toute forme et de toute matière et doit présenter au moins une portion de surface transparente. Avantageusement, le réceptacle est totalement transparent.

Dans le procédé de préparation du dispositif selon l'invention, il est possible de refroidir préalablement le solvant liquide lors de l'étape d), dans le but de diminuer le temps de solidification du solvant une fois la composition colorée introduite. Cette étape permet en outre de diminuer le bilan énergétique requis pour refroidir le solvant de la température ambiante à la température de solidification. En effet, la solidification du solvant doit avoir lieu avant la diffusion totale de la composition colorée dans le solvant. Ainsi, si la vitesse de diffusion est particulièrement élevée, il convient de refroidir très rapidement le solvant pour atteindre l'état solide avant la diffusion totale, ce qui peut être coûteux énergétiquement.

Ainsi, lors de l'étape d), le solvant liquide est éventuellement refroidi jusqu'à une température proche, supérieure ou égale à sa température de solidification, mais sans entraîner la solidification du solvant. Avantageusement, le solvant liquide est éventuellement refroidi jusqu'à une température supérieure à la température de solidification de 0,5°C à 10°C, plus avantageusement de 0,5°C à 5°C. Par exemple, lorsque l'eau est utilisée en tant que solvant, sa température peut être abaissée de la température ambiante à 1°C lors de l'étape d). Lors de l'étape f), il conviendra alors de refroidir l'eau de 1°C environ à 0°C.

Le refroidissement est avantageusement effectué par des méthodes et des dispositifs de réfrigération/congélation connus de l'homme du métier. Par exemple, le refroidissement peut être effectué par conduction, convection et/ou évaporation, par exemple à l'aide d'eau ou d'air en tant que réfrigérant. Le refroidissement peut par exemple être effectué à l'aide d'une cellule de refroidissement rapide, d'un bain glacé ou froid, de plaques eutectiques, ou d'un système de refroidissement industrielle.

Dans le cadre de l'invention, le refroidissement de l'étape f) est effectué de sorte à obtenir un solvant solide (ou solvant solidifié) transparent. L'homme du métier, à l'aide de ses connaissances générales, saura déterminer quelle méthode de refroidissement utilisée selon le solvant choisi.

Lors de l'étape e), la composition colorée est introduite dans le réceptacle comprenant le solvant liquide et commence à diffuser dans ledit solvant. L'homme du métier saura incorporer la composition colorée de sorte qu'une diffusion totale dès l'incorporation soit évitée. L'étape e) est stoppée avant diffusion totale de la composition colorée par le refroidissement de l'ensemble obtenu lors de l'étape f).

Ainsi, lors de l'étape f), l'ensemble obtenu est refroidi de sorte à solidifier au moins le solvant liquide dans lequel la composition colorée a été diffusée partiellement, de sorte à donner une forme spécifique à la composition colorée diffusée qu'elle ne peut conserver que par le maintien de l'enceinte à une température en-dessous de la température de solidification dudit solvant ; ce qui permet d'obtenir le solvant solide.

Les méthodes et dispositifs de refroidissement qu'il est possible d'utiliser sont tels que des définis ci-dessus concernant l'étape d).

La présente invention porte également sur un dispositif témoin pour la détection d'une variation de la température dans une enceinte susceptible d'être obtenu par le procédé de préparation selon l'invention.

## Méthode de détection d'une variation de la température dans une enceinte

La présente invention porte en outre sur une méthode de détection d'une variation de la température dans une enceinte, ladite méthode comprenant les étapes de :

i. Fournir un dispositif selon l'invention, tel que défini ci-dessus ou susceptible d'être obtenue par le procédé selon l'invention, tel que défini ci-dessus ;
ii. Placement dudit dispositif dans l'enceinte ;
iii. Contrôle de la forme spécifique de la composition colorée partiellement diffusée dans le solvant.

La méthode selon l'invention permet une détection d'une variation de la température dans une enceinte, avantageusement une détection d'une élévation de la température.

Comme développé ci-dessus, l'élévation de la température peut éventuellement être suivie d'une diminution de la température. Dans ce cadre, il est possible que la température de l'enceinte augmente, par exemple suite à un défaut technique du système de maintien de la température, puis que la température diminue pour atteindre de nouveau la température initiale de l'enceinte.

Avantageusement, dans le cadre de l'invention, la variation de la température caractérise une rupture de la chaîne du froid. Ainsi, la méthode selon l'invention est avantageusement une méthode pour la détection d'une rupture de la chaîne du froid.

Avantageusement, la méthode selon l'invention permet de détecter une variation de la température de 1°C ou moins. Plus avantageusement, la méthode selon l'invention, permet de détecter une variation de la température comprise entre 0,1 et 1°C.

Avantageusement, la méthode selon l'invention permet de détecter une élévation de la température de 1°C ou moins. Plus avantageusement, la méthode selon l'invention, permet de détecter une élévation de la température comprise entre 0,1 et 1°C.

Dans le cadre de la présente invention, l'enceinte est avantageusement une enceinte de conservation, avantageusement de conservation de produits sensibles à la température.

Avantageusement, l'enceinte est un emballage primaire, secondaire ou tertiaire, tel qu'un emballage isotherme ou un container de transport tel qu'un container de transport maritime, aérien, routier ou spatial ; un moyen de transport tel qu'un camion réfrigéré ou un chariot réfrigéré ; un moyen de manutention tel qu'une salle blanche ; ou un moyen de stockage tel qu'un réfrigérateur, une chambre froide ou un congélateur.

Pour l'étape i) de la méthode selon l'invention, toutes les caractéristiques du dispositif selon l'invention et de son procédé de préparation sont telles que définies ci-dessus.

Pour l'étape ii), l'homme du métier saura comment placer le dispositif dans l'enceinte de sorte à ce qu'il soit soumis à la même température que l'enceinte elle-même ainsi que des produits qu'elle contient.

Lors de l'étape iii), la forme spécifique obtenue par diffusion partielle de la composition colorée dans le solvant est contrôlée de sorte à identifier une variation de la température dans l'enceinte.

Avantageusement, l'étape iii) est effectué par capture d'image, puis avantageusement par localisation de minuties.

Plus particulièrement, l'étape iii) comprend au moins les sous-étapes suivantes :

- Capture d'au moins une image de référence, au moment du placement du dispositif dans l'enceinte ;

- Capture d'au moins une image à comparer, pendant ou après la conservation des produits dans l'enceinte ;

- Comparaison des images de référence et des images à comparer afin d'évaluer leur degré de similitude.

La capture des images peut être effectuée par tous dispositifs et toutes méthodes connues de l'homme du métier, telle qu'une caméra, un appareil photo, un capteur CCD ou encore un capteur CMOS par exemple. La résolution maximale du capteur utilisé déterminera la finesse de l'analyse des points singuliers caractéristiques du profil de diffusion obtenu.

Avantageusement, le dispositif de capture d'image est un dispositif à haute définition afin d'obtenir la meilleure résolution d'image possible, et ainsi la meilleure comparaison possible.

Avantageusement, le dispositif de capteur d'image selon l'invention comprend un capteur CCD (Charged Coupled Device) ou un capteur CMOS (Complementary Metal Oxide Semiconductor).

Si la composition colorée utilisée est une composition colorée sous rayonnement UV ou IR, le dispositif utilisé pour la capture d'image devra alors être adapté pour capturer et transcrire ce type de rayonnement.

Une fois les images capturées, un lot de points singuliers appelés « minuties » est avantageusement identifié. Les minuties sont des points singuliers, des caractéristiques typiques telles que des boucles, des fourches, des angles aigus et obtus, ou des lignes droites très localisées. Toutes ces caractéristiques peuvent être situées dans des plans *Oxy* et Ozy ; puis transcrites en coordonnées telles qu'abscisse, ordonnée et angle par rapport au système de coordonnées. Pour chaque minutie « m », il y a deux triplets : $(x, y, \alpha)$ dans le plan *O,x,y*, liés à $(z, y, \beta)$ dans le plan O,z,y. Les minuties du dispositif pendant ou après utilisation (dispositif S) sont alors comparées aux minuties du dispositif initial (dispositif G). L'homme du métier saura déterminer quelle méthode de comparaison utiliser, à l'aide de ses connaissances générales.

Par exemple, la forme spécifique obtenue initialement par la diffusion de la composition colorée dans le solvant, dans le dispositif initial, noté « G » (pour <u>G</u>enuine, original) peut être décrit par une série de données :

[Math. 1]

$$F(G) = \{m_1, m_2, \dots m_n\} \; avec \; m_1^G = (x_1, y_1, \alpha_1, z_1, \beta_1) \dots m_n^G = (x_n, y_n, \alpha_n, z_n, \beta_n)$$

Ensuite, afin de comparer le degré de similitude entre le dispositif initial G et le dispositif à comparer S (pour

« *under Scrutiny* », sous observation) obtenu après un certain temps t, les mêmes paramètres que ci-dessus peuvent être identifiés :

[Math. 2]

$$F(S) = \{m_1, m_2, \dots m_n\} \; avec \; m_1^S = (x_1, y_1, \alpha_1, z_1, \beta_1) \dots m_n^S = (x_n, y_n, \alpha_n, z_n, \beta_n)$$

Les deux jeux de données dans $O,x,y$ et O,z,y par rapport aux dispositifs G et S peuvent ensuite être analysés. Par exemple, pour comparer les dispositifs G et S, toutes les coordonnées de minuties et la position angulaire devront satisfaire à un degré de similitude faisant l'objet d'un seuil de tolérance « $\Delta$ » tendant à zéro ou strictement de zéro. Pour cela, la distance spatiale (SD) entre une minutie du dispositif G et la même minutie pour le dispositif S devrait vérifier l'inéquation suivante :

[Math. 3]

$$SD(m^S, m^G) = \sqrt{(x_n^S - x_n^G)^2 + (y_n^S - y_n^G)^2} < \Delta$$

Bien entendu, avec deux jeux de données identiques (<$\Delta$), il pourra être conclu que les minuties dans les dispositifs G et S sont couplées : aucune variation de la température n'est détectée. Sinon, si le dispositif S est différent du dispositif G, une variation de la température a eu lieu.

Une autre technique de comparaison selon l'invention pourrait être de mesurer le décalage angulaire potentiel des minuties dans S *(an,/3n)* à partir de G *(an,/3n).*

Selon l'invention, plus il y a de minuties contrôlées, plus le résultat obtenu est précis.

Avantageusement, l'étape iii) selon l'invention permet de détecter une modification de la forme spécifique de la composition colorée partiellement diffusée dans le solvant, non visible à l'échelle macroscopique. Plus avantageusement, l'étape iii) selon l'invention permet de détecter une modification microscopique de la forme spécifique de la composition colorée partiellement diffusée dans le solvant.

Avantageusement, l'étape iii) est effectuée en continu ou à intervalle régulier, plus avantageusement en temps réel. Ceci pourrait permettre de détecter le moment, le lieu et la durée pendant laquelle la variation de température a eu lieu et ainsi déterminer l'influence de cette variation, par exemple sur les produits conservés dans l'enceinte.

Les exemples qui suivent visent à illustrer la présente invention de manière non limitative.

## DESCRIPTION DES FIGURES

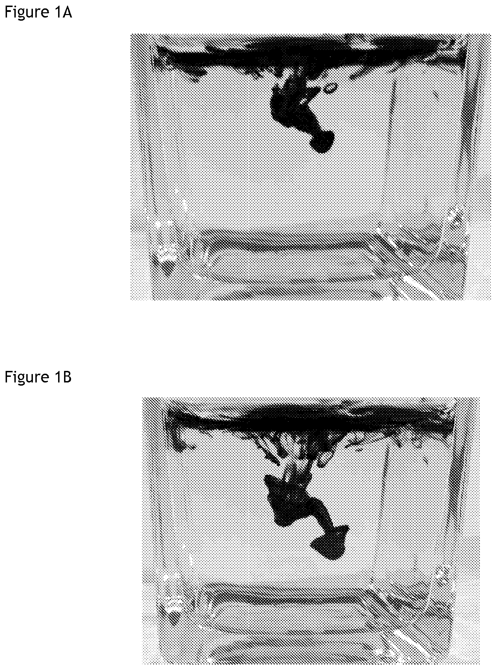

La Figure 1 montre le dispositif obtenu au moment de l'injection de l'encre ($t_0$) (Figure 1A) puis la diffusion de l'encre dans l'eau ($t_1$) (Figure 1B).

La Figure 2 représente le dispositif obtenu après congélation, c'est-à-dire après congélation de l'eau ($t_2$) (face (0,x,y) à gauche et face adjacente (0,z,y) à droite) .

## EXEMPLES

### Exemple 1 : Préparation d'un dispositif selon la présente invention

Matériel :

Un cube transparent de 27 cm$^3$ (cotés de 3 cm) ;

De l'eau liquide (température de solidification = 0°C (33,8° F)) ;

Une composition colorée comprenant de l'encre bleue Watterman® pour les stylos, principalement fabriqué à partir de la molécule de méthyl violet 6B ayant la formule chimique brute : $C_{24}H_{28}ClN_3$. Sa viscosité est de 1,11, mPa.s à température ambiante et son rayon de 112 Angströms ; et

Un appareil de refroidissement de type unité de refroidissement à effet Peltier est utilisé.

Protocole :

Le cube de 27 cm$^3$ est rempli d'eau liquide, puis refroidi à environ +1°C.

Puis, une goutte de la composition colorée est déposée à la surface de l'eau liquide dans le cube ($t_0$) et laissée à diffuser partiellement dans l'eau pendant quelques secondes (maximum 4 secondes) ($t_1$). Tant que les molécules d'encre continuent leur parcours aléatoire, la forme gagne en complexité.

Enfin, refroidissement de l'ensemble jusqu'à congélation de l'eau ($t_2$).

La congélation a lieu avant diffusion totale de la composition colorée dans l'eau.

**Exemple 2 : Enregistrement des images du dispositif obtenu**

Pour cet exemple, le dispositif obtenu dans l'exemple 1 est repris. Deux images correspondant à deux faces du cube sont enregistrées et nous donnent les coordonnées (x,y,z) du « nuage » aléatoire de l'encre à l'intérieur du solvant (eau), qui vient juste d'être solidifié.

Ces images mesurent 3 cm x 3 cm (1,18$^2$ pouce) avec une haute résolution de 2000 pixels ou 1693 points par pouce (DPI). L'image est caractérisée comme suit :

- 4 millions de pixels (2000 x 2000)
- en couleurs vraies 24 bits : 12 000 000 octets ou 11 444 Mo.

Par conséquent, avec deux faces photographiées, l'espace mémoire nécessaire est de ≈ 22 888 Mo.

Cet enregistrement atteste de la preuve de l'intégrité du cube congelé et accompagnera l'article depuis son départ de l'usine alimentaire. Du producteur au consommateur final, il doit rester identique et les images prises initialement serviront de cadre de référence lors de la comparaison nécessaire à la fin de la chaîne du froid.

**Exemple 3 : Procédure de comparaison pour mettre en lumière une rupture dans la chaîne du froid**

Des images du dispositif obtenu à l'exemple 1 sont capturées comme décrit dans l'exemple 2.

***3.1. Caractéristiques de la minutie***

Les minuties sont des points singuliers, des caractéristiques typiques telles que des boucles, des fourches, des angles aigus et obtus, ou des lignes droites très localisées. Toutes ces caractéristiques peuvent être situées dans des plans *Oxy* et Ozy ; puis transcrites en coordonnées telles qu'abscisse, ordonnée et angle par rapport au système de coordonnées. Pour chaque minutie « m », nous avons deux triplets :
($x,y,\alpha$) dans le plan *O,x,y*, liés à ($z,y,\beta$) dans le plan O,z,y.

Globalement, le nuage de soluté formé dans le solvant, noté « G » (pour ***Genuine**, original*) est décrit par une série de données :

[Math. 4]

$$F(G) = \{m_1, m_2, \ldots m_n\} \; avec \; m_1^G = (x_1, y_1, \alpha_1, z_1, \beta_1) \ldots m_n^G = (x_n, y_n, \alpha_n, z_n, \beta_n)$$

Enfin, se produit la comparaison entre l'image du cube G et un autre cube pour vérifier, noté « S » (pour « *under Scrutiny* », sous observation). Ce cube S peut être le même que G bien que corrompu par une rupture de la chaîne du froid ; ou un autre cube intentionnellement remplacé par une personne mal intentionnée. A cette fin, nous vérifions les mêmes paramètres que ci-dessus :

[Math. 5]

$$F(S) = \{m_1, m_2, \ldots m_n\} \; avec \; m_1^S = (x_1, y_1, \alpha_1, z_1, \beta_1) \ldots m_n^S = (x_n, y_n, \alpha_n, z_n, \beta_n)$$

Les deux jeux de données dans *O,x,y* et O,z,y par rapport aux cubes G et S sont analysés

Plus simplement, pour vérifier les cubes G et S, toutes les coordonnées de minutie et la position angulaire devront satisfaire à un degré de similitude faisant l'objet d'un seuil de tolérance « Δ » tendant à zéro ou proche strictement de zéro.

Donc, la distance spatiale SD doit vérifier l'inéquation : [Math. 6]

$$SD(m^S, m^G) = \sqrt{(x_n^S - x_n^G)^2 + (y_n^S - y_n^G)^2} < \Delta$$

Bien entendu, avec deux jeux de données identiques, nous pouvons conclure que les minuties dans les cubes G et S sont couplées : le produit contrôlé est sûr. Sinon, si S ≠ G, une rupture de la chaîne du froid a eu lieu pendant la durée de vie du produit.

Le même principe pourrait être suivi pour mesurer le décalage angulaire potentiel des minuties dans S *(an,/3n)* à partir de G *(an,/3n)*.

Naturellement, plus il y a de minuties contrôlées, plus nous obtiendrons un résultat précis.

Pour éviter les faux positifs, un dispositif automatisé et un logiciel utiliseront préférentiellement un score de similitude global :

$$Score = \frac{k}{\dfrac{(nombre\ de\ minuties\ m^G + nombre\ de\ minuties\ m^S)}{2}}$$

Avec :
k = nombre de minuties identiques d'après le seuil fixé.

## Revendications

1. Dispositif témoin pour la détection d'une variation de la température dans une enceinte, **caractérisé en ce qu'**il comprend un réceptacle ayant au moins une portion de surface transparente comprenant un solvant solidifié, avantageusement transparent, dont la température de solidification correspond au seuil maximal de température souhaité dans l'enceinte, **caractérisé en ce qu'**une composition colorée de couleur différente dudit solvant a été partiellement diffusée avant solidification dudit solvant.

2. Dispositif selon la revendication 1, **caractérisé en ce que** le solvant a une température de solidification comprise entre -18°C et +25°C, avantageusement entre -18°C et +20° C, plus avantageusement entre -18°C et +15°C, plus avantageusement comprise entre -18°C et +8°C.

3. Dispositif selon l'une quelconque des revendications 1 et 2, **caractérisé en ce que** le réceptacle comprend au moins deux surfaces ayant au moins une portion transparente, avantageusement au moins trois surfaces ayant au moins une portion transparente, plus avantageusement le réceptacle est totalement transparent.

4. Dispositif selon l'une quelconque des revendications 1 à 3, **caractérisé en ce que** le solvant est choisi parmi l'eau, les hydrocarbures, une huile, un alcool, une solution électrolytique, et leurs mélanges.

5. Procédé de préparation d'un dispositif témoin pour la détection d'une variation de la température dans une enceinte, comprenant les étapes suivantes :

   a) Choisir un solvant liquide, avantageusement transparent à l'état solide, dont la température de solidification correspond au seuil maximal de température souhaité dans l'enceinte ;
   b) Choisir une composition colorée de couleur différente dudit solvant ;
   c) Introduire ledit solvant liquide dans un réceptacle ayant au moins une portion de surface transparente, ledit réceptacle comprenant au moins une ouverture permettant d'incorporer le solvant puis la composition colorée ;
   d) Eventuellement, refroidissement dudit solvant liquide ;
   e) Introduction, et diffusion partielle de la composition colorée dans ledit solvant liquide, ladite composition colorée étant de couleur différente dudit solvant ;
   f) Refroidissement de sorte à solidifier au moins le solvant liquide dans lequel la composition colorée a été diffusée partiellement, de sorte à donner une forme spécifique à la composition colorée diffusée qu'elle ne peut conserver que par le maintien de l'enceinte à une température au-dessous de la température de solidification dudit solvant.

**6.** Procédé selon la revendication 5, **caractérisé en ce que** le solvant choisi à l'étape a), a une température de solidification comprise entre -18°C et +25 °C, avantageusement entre -18°C et +20° C, plus avantageusement entre -18°C et +15°C, plus avantageusement comprise entre -18°C et +8°C.

**7.** Procédé selon l'une quelconque des revendications 5 et 6, **caractérisé en ce que** le réceptacle comprend au moins deux surfaces ayant au moins une portion transparente, avantageusement au moins trois surfaces ayant au moins une portion transparente, plus avantageusement le réceptacle est totalement transparent.

**8.** Procédé selon l'une quelconque des revendications 5 à 7, **caractérisé en ce que** le solvant choisi à l'étape a) est choisi parmi l'eau, les hydrocarbures, une huile, un alcool, une solution électrolytique, et leurs mélanges.

**9.** Procédé selon l'une quelconque des revendications 5 à 8, **caractérisé en ce que** la viscosité de la composition colorée choisie à l'étape b), est comprise entre 1 et 1000 mPa.s à température ambiante.

**10.** Méthode de détection d'une variation de la température dans une enceinte, ladite méthode comprenant au moins les étapes de :

    i. Fournir un dispositif selon l'une quelconque des revendications 1 à 4 ou susceptible d'être obtenue par le procédé selon l'une quelconque des revendications 5 à 9 ;
    ii. Placement dudit dispositif dans l'enceinte ;
    iii. Contrôle de la forme spécifique de la composition colorée partiellement diffusée dans le solvant.

**11.** Méthode selon la revendication 10, **caractérisée en ce que** l'étape iii) est effectué par capture d'image, puis avantageusement par localisation de minuties.

**12.** Méthode selon la revendication 10 ou 11, **caractérisée en ce que** l'étape iii) est effectuée en continu, avantageusement en temps réel.

**13.** Méthode selon l'une quelconque des revendications 10 à 12, **caractérisée en ce que** l'enceinte est une enceinte de conservation, avantageusement de conservation de produit sensible à la température.

**14.** Méthode selon l'une quelconque des revendications 10 à 13, **caractérisée en ce que** l'enceinte est un emballage primaire, un emballage secondaire, un emballage tertiaire, un moyen de transport, un moyen de manutention, ou un moyen de stockage.

**Patentansprüche**

**1.** Kontrollvorrichtung für die Erfassung einer Temperaturänderung in einer Kammer, **dadurch gekennzeichnet, dass** sie einen Behälter mit mindestens einem transparenten Oberflächenabschnitt umfasst, der ein erstarrtes, vorzugsweise transparentes Lösungsmittel umfasst, dessen Erstarrungstemperatur dem gewünschten maximalen Temperaturgrenzwert in der Kammer entspricht, **dadurch gekennzeichnet, dass** eine farbige Zusammensetzung mit einer von dem Lösungsmittel verschiedenen Farbe vor der Erstarrung des Lösungsmittels teilweise verteilt wurde.

**2.** Vorrichtung nach Anspruch 1, **dadurch gekennzeichnet, dass** das Lösungsmittel eine Erstarrungstemperatur zwischen -18 °C und +25 °C, in vorteilhafter Weise zwischen -18 °C und +20 °C, vorteilhafter zwischen -18 °C und +15 °C hat, die vorteilhafter zwischen -18 °C und +8 °C liegt.

**3.** Vorrichtung nach einem der Ansprüche 1 und 2, **dadurch gekennzeichnet, dass** der Behälter mindestens zwei Oberflächen mit mindestens einem transparenten Abschnitt umfasst, in vorteilhafter Weise mindestens drei Oberflächen mit mindestens einem transparenten Abschnitt, wobei der Behälter vorteilhafter vollständig transparent ist.

**4.** Vorrichtung nach einem der Ansprüche 1 bis 3, **dadurch gekennzeichnet, dass** das Lösungsmittel aus Wasser, Kohlenwasserstoffen, einem Öl, einem Alkohol, einer Elektrolytlösung und deren Gemischen ausgewählt ist.

**5.** Verfahren zur Herstellung einer Kontrollvorrichtung für die Erfassung einer Temperaturänderung in einer Kammer, umfassend die folgenden Schritte:

a) Wählen eines flüssigen, vorteilhafterweise im festen Zustand transparenten Lösungsmittels, dessen Erstarrungstemperatur dem gewünschten maximalen Temperaturgrenzwert in der Kammer entspricht;

b) Wählen einer farbigen Zusammensetzung mit einer anderen Farbe als das Lösungsmittel;

c) Einleiten des flüssigen Lösungsmittels in einen Behälter mit mindestens einem transparenten Oberflächenabschnitt, wobei der Behälter mindestens eine Öffnung umfasst, die es ermöglicht, das Lösungsmittel und dann die farbige Zusammensetzung aufzunehmen;

d) gegebenenfalls Kühlen des flüssigen Lösungsmittels;

e) Einleiten und teilweises Verteilen der farbigen Zusammensetzung in dem flüssigen Lösungsmittel, wobei die farbige Zusammensetzung eine andere Farbe als das Lösungsmittel hat;

f) Kühlen, um zumindest das flüssige Lösungsmittel, in dem die farbige Zusammensetzung teilweise verteilt wurde, zu verfestigen, um der verteilten farbigen Zusammensetzung eine spezifische Form zu geben, die sie nur durch Halten des Gefäßes auf einer Temperatur unterhalb der Erstarrungstemperatur des Lösungsmittels beibehalten kann.

**6.** Verfahren nach Anspruch 5, **dadurch gekennzeichnet, dass** das in Schritt a) gewählte Lösungsmittel eine Erstarrungstemperatur zwischen -18 °C und +25° C, in vorteilhafter Weise zwischen -18 °C und +20 °C, vorteilhafter zwischen -18 °C und +15 °C hat, die vorteilhafter zwischen -18 °C und +8 °C liegt.

**7.** Verfahren nach einem der Ansprüche 5 und 6, **dadurch gekennzeichnet, dass** der Behälter mindestens zwei Oberflächen mit mindestens einem transparenten Abschnitt umfasst, vorteilhafterweise mindestens drei Oberflächen mit mindestens einem transparenten Abschnitt, wobei der Behälter vorteilhafter vollständig transparent ist.

**8.** Verfahren nach einem der Ansprüche 5 bis 7, **dadurch gekennzeichnet, dass** das in Schritt a) gewählte Lösungsmittel aus Wasser, Kohlenwasserstoffen, einem Öl, einem Alkohol, einer Elektrolytlösung und deren Gemischen ausgewählt ist.

**9.** Verfahren nach einem der Ansprüche 5 bis 8, **dadurch gekennzeichnet, dass** die Viskosität der in Schritt b) gewählten farbigen Zusammensetzung bei Raumtemperatur zwischen 1 und 1000 mPa.s liegt.

**10.** Verfahren für die Erfassung einer Temperaturänderung in einer Kammer, wobei das Verfahren mindestens die folgenden Schritte umfasst:

i. Bereitstellen einer Vorrichtung nach einem der Ansprüche 1 bis 4 oder erhältlich durch das Verfahren nach einem der Ansprüche 5 bis 9;

ii. Platzieren der Vorrichtung in der Kammer;

iii. Kontrolle der spezifischen Form der farbigen Zusammensetzung, die teilweise im Lösungsmittel verteilt ist.

**11.** Verfahren nach Anspruch 10, **dadurch gekennzeichnet, dass** Schritt iii) durch Bilderfassung und dann in vorteilhafter Weise durch genaue Lokalisierung durchgeführt wird.

**12.** Verfahren nach Anspruch 10 oder 11, **dadurch gekennzeichnet, dass** Schritt iii) kontinuierlich, in vorteilhafter Weise in Echtzeit, durchgeführt wird.

**13.** Verfahren nach einem der Ansprüche 10 bis 12, **dadurch gekennzeichnet, dass** die Kammer eine Aufbewahrungskammer ist, in vorteilhafter Weise zur Aufbewahrung eines temperaturempfindlichen Produkts.

**14.** Verfahren nach einem der Ansprüche 10 bis 13, **dadurch gekennzeichnet, dass** die Kammer eine Primärverpackung, eine Sekundärverpackung, eine Tertiärverpackung, ein Transportmittel, ein Handhabungsmittel oder ein Lagerungsmittel ist.

**Claims**

**1.** A control device for detecting a variation in temperature in an enclosure, **characterised in that** it comprises a receptacle having at least one transparent surface portion comprising a solid solvent which is advantageously transparent and the solidification temperature of which corresponds to the maximum temperature threshold required in the enclosure, **characterised in that** a coloured composition having a different colour from said solvent has been partially diffused before said solvent is solidified.

2. A device according to claim 1, **characterised in that** the solvent has a solidification temperature of between -18°C and +25°C, advantageously between -18°C and +20°C, more advantageously between -18°C and +15°C, and more advantageously between -18°C and +8°C.

3. A device according to any one of claims 1 and 2, **characterised in that** the receptacle comprises at least two surfaces having at least one transparent portion, advantageously at least three surfaces having at least one transparent portion, and more advantageously the receptacle is totally transparent.

4. A device according to any one of claims 1 to 3, **characterised in that** the solvent is chosen from water, hydrocarbons, an oil, an alcohol, an electrolytic solution, and their mixtures.

5. A process for preparing a control device for detecting a variation in temperature in an enclosure, comprising the following steps:

   a) Choosing a liquid solvent which is advantageously transparent in the solid state and the solidification temperature of which corresponds to the maximum temperature threshold required in the enclosure;
   b) Choosing a coloured composition having a different colour from said solvent;
   c) Introducing said liquid solvent into a receptacle having at least one transparent surface portion, said receptacle comprising at least one opening allowing the solvent and then the coloured composition to be introduced;
   d) Eventually cooling said liquid solvent;
   e) Introducing the coloured composition, and partially diffusing it in said liquid solvent, said coloured composition being a different colour from said solvent;
   f) Cooling so as to solidify at least the liquid solvent in which the coloured composition has been partially diffused, so as to give the diffused coloured composition a specific shape that it can only keep by keeping the enclosure at a temperature lower than the solidification temperature of said solvent.

6. A process according to claim 5, **characterised in that** the solvent chosen in step a) has a solidification temperature of between -18°C and +25°C, advantageously between -18°C and +20°C, more advantageously between -18°C and +15°C, and more advantageously between -18°C and +8°C.

7. A process according to any one of claims 5 and 6, **characterised in that** the receptacle comprises at least two surfaces having at least one transparent portion, advantageously at least three surfaces having at least one transparent portion, and more advantageously the receptacle is totally transparent.

8. A process according to any one of claims 5 to 7, **characterised in that** the solvent chosen in step a) is chosen from water, hydrocarbons, an oil, an alcohol, an electrolytic solution, and their mixtures.

9. A process according to any one of claims 5 to 8, **characterised in that** the viscosity of the coloured composition chosen in step b) is of between 1 and 1000 mPa.s at ambient temperature.

10. A method for detecting a variation in temperature in an enclosure, said method comprising at least the steps of:

    i. Providing a device according to any one of claims 1 to 4 or a device which can be obtained by the process according to any one of claims 5 to 9;
    ii. Placing said device in the enclosure;
    iii. Inspecting the specific shape of the coloured composition that is partially diffused in the solvent.

11. A method according to claim 10, **characterised in that** step iii) is carried out by image capture, then advantageously by locating minutiae.

12. A method according to claim 10 or 11, **characterised in that** step iii) is carried out continuously, advantageously in real time.

13. A method according to any one of claims 10 to 12, **characterised in that** the enclosure is a preservation enclosure, advantageously for preserving temperature-sensitive products.

14. A method according to any one of claims 10 to 13, **characterised in that** the enclosure is a primary packaging, a secondary packaging, a tertiary packaging, a transport facility, a handling facility, or a storage facility.

Figure 1A

Figure 1B

Figure 2

**EP 4 147 020 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007098039 A1
- US 7275863 B1
- US 2014048010 A1